# EUROPEAN PATENT SPECIFICATION

(11) **EP 4 231 204 B1**
(45) Date of publication and mention of the grant of the patent: **17.12.2025**
(21) Application number: 21866143.7
(22) Date of filing: 10.09.2021
(51) Int. Cl.: G06N 10/80, G06N 10/20, G06N 20/00

(54) **SYSTEM FOR DEVELOPING AND RUNNING APPLICATIONS IN HYBRID QUANTUM COMPUTING NETWORKS**
SYSTEM ZUR ENTWICKLUNG UND AUSFÜHRUNG VON ANWENDUNGEN IN HYBRIDEN QUANTENCOMPUTERNETZWERKEN
SYSTÈME DE DÉVELOPPEMENT ET D'EXÉCUTION D'APPLICATIONS DANS DES RÉSEAUX INFORMATIQUES QUANTIQUES HYBRIDES

(30) Priority: 11.09.2020 ES 202030926
(43) Date of publication of application: 23.08.2023
(73) Proprietor: PETERSSEN NODARSE, Guido Rogelio, 28754 Mangirón (Madrid) (ES); Hevia Oliver, José Luis, 28754 Mangirón (ES); Piattini Velthuis, Mario Gerardo, 28754 Mangirón (ES)
(72) Inventor: PETERSSEN NODARSE, Guido Rogelio, 28754 Mangirón (Madrid) (ES); Hevia Oliver, José Luis, 28754 Mangirón (ES); Piattini Velthuis, Mario Gerardo, 28754 Mangirón (ES)
(74) Representative: Serrano Irurzun, Javier
(86) International application number: PCT/ES2021/070654
(87) International publication number: WO 2022/053732

(56) References cited:
- AU-A1- 2002 350 357
- US-A1- 2003 169 041
- US-A1- 2019 042 264
- US-B1- 10 592 216
- ALEXANDER J MCCASKEY ET AL: "A Language and Hardware Independent Approach to Quantum-Classical Computing", ARXIV.ORG, CORNELL UNIVERSITY LIBRARY, 201 OLIN LIBRARY CORNELL UNIVERSITY ITHACA, NY 14853, 4 October 2017 (2017-10-04), XP081327357
- ANONYMOUS: "Quantum Volume: A Yardstick To Measure The Performance Of Quantum Computers - Moor Insights & Strategy", 12 August 2020 (2020-08-12), XP055973165, Retrieved from the Internet <URL:https://web.archive.org/web/20200812203559/https://moorinsightsstrategy.com/quantum-volume-a-yardstick-to-measure-the-performance-of-quantum-computers/> [retrieved on 20221020]
- CROSS ANDREW W. ET AL: "Validating quantum computers using randomized model circuits", vol. 100, no. 3, 1 September 2019 (2019-09-01), XP055973167, ISSN: 2469-9926, Retrieved from the Internet <URL:https://arxiv.org/pdf/1811.12926.pdf> DOI: 10.1103/PhysRevA.100.032328
- WILLE ROBERT ET AL.: "IBM 's Qiskit Tool Chain: Working with and Developing for Real Quantum Computers", 2019 DESIGN, AUTOMATION & TEST IN EUROPE CONFERENCE & EXHIBITION, 25 March 2019 (2019-03-25), pages 1234 - 1240, XP033550258, DOI: 10.23919/DATE.2019.8715261

## Description

### FIELD OF THE INVENTION

The present invention relates to the field of quantum computing and, particularly, to the area of application development and execution systems for developing and executing said applications in quantum computing networks. More specifically, the invention relates to hybrid computing architectures, the inputs of which may comprise conventional and/or quantum algorithms, and the outputs of which are quantum programs that can be executed in quantum computers of identical or different nature, preferably in agnostic mode, i.e., without any limitation to a single language or native program development environment.

### BACKGROUND OF THE INVENTION

The diversification and the applications of information technologies have grown exponentially this century. With it, the activity based on said technologies generates, on a daily basis, large volumes of data which require increasingly greater processing capabilities and immediate access to said volumes of data. In this context, Moore's law is taking conventional computer processors to their limit, as they are traditionally known. This limitation, combined with the challenges posed by maintaining generated data security and integrity, has brought about the need to develop new information processing technologies based on non-conventional technologies.

In the past few decades, quantum technologies have evolved considerably in their applications in the field of computing. Although initial quantum computer prototypes had some serious limitations in terms of both reliability and performance, some manufacturers (IBM, Google, Microsoft, Rigetti, D-Wave) have already started offering reliable solutions on a commercial level or at least as more or less developed stable prototypes, indicating that the quantum computing sector is close to being mature enough to penetrate the market on a massive scale in the next ten or fifteen years. While said solutions are at an early stage of development to be utilised on a business level, patterns and relations are quickly being established so as to create, in the short term, the conditions necessary for this new technology to become a reality, changing not only the ways of working, but also globally understanding the information technology sector.

The probabilistic nature of quantum mechanics (basis of quantum computing technologies) provides a series of advantages in the application thereof to the development of algorithms, allowing a more efficient execution thereof than by means of conventional deterministic computing. This makes it possible to solve problems whose complexity renders impossible solving them by means of conventional computers in reasonable processing times, even using supercomputers or very large computing networks based on large-scale parallel processing. Likewise, quantum algorithmic techniques have been under continuous development since the 1980s and are now considered to be at a sufficiently mature state to be implemented in physical systems.

In existing commercial quantum computer solutions, each manufacturer generally provides a different language, a different environment, or a different development kit for the development of computing algorithms and applications (for example, IBM's QISKIT or Microsoft's QDK development kits). This is due to the fact that, in addition to commercial reasons, the hardware on which each machine is based presents enormous differences compared to that of other manufacturers (due to technological and design reasons, number of quantum bits, etc.), which makes it necessary for each commercial quantum computer to be able to execute only native algorithms (i.e., programmed in the language provided by the manufacturer of each machine). This situation also imposes different limitations on the reproducibility of algorithms in other languages, as well as on their performance (given that each quantum computer today behaves differently depending on the executed algorithms). As a consequence, the reality today is that some computers are better for implementing certain routines than others.

As an additional limitation, it must be assumed that conventional computing (and the corresponding algorithmics) will most likely co-exist with quantum computing for a long time. Likewise, the replacement of conventional systems with quantum systems will foreseeably be slow, which creates the need to generate hybrid computing architectures, through which it is possible to adapt or to translate known conventional algorithms to quantum algorithms suitable for optimal execution thereof in the machines of each manufacturer or language.

Although inferior to native platforms, hybrid conventional-quantum solutions already far surpass solutions that the most powerful "conventional" processors can execute in reasonable times. As a result, their use may solve, in the short and medium terms, the transition from the conventional native environment to the quantum native environment. Hybrid architectures can thereby provide efficient tools for evaluating, testing, and utilising quantum technologies, but without having to wait for the time when native quantum computing provides equivalent services. By way of example and according to current studies, solutions can already be built as a result of hybrid architecture in the fields of health, chemistry, logistics, finances, and, in general, any big data model, which may benefit from the new quantum calculation capability for solving current problems.

A system known for implementing quantum computing integrated development environments is described in patent application US 2003/0169041 A1. However, this solution necessarily requires the use of one driver hardware for each type of quantum computing architecture connected to said system.

Another proposal known for the implementation of quantum algorithm development and execution environments is described in the research paper by Robert Wille et al., titled "IBM's Qiskit Tool Chain: Working with and Developing for Real Quantum Computers" and published in 2019 Design, Automation & Test in Europe Conference & Exhibition (DATE), 20190325 EDAA. This document discloses a conventional transpilation tool based on the use of quantum computer resource optimisation rules, for example by means of simplifying routines, reducing operations, etc. However, this tool does not allow use of quantum computers with different architectures.

Another proposal for integrating different quantum computing systems under a single development application is disclosed in the article *"*A Language and Hardware Independent Approach to Quantum-Classical Computing", Arxiv.Org, Cornell University Library 201, Ithaca, NY 14853 (4 October 2017). This document describes a programming model and software framework that enables quantum acceleration within standard or high-performance computing software workflows. Said framework follows a coprocessor machine model that is independent of the underlying quantum computing hardware, thereby enabling quantum programs to be defined and executed on a variety of quantum processing unit types, through a unified application programming interface. However, this proposal fails to provide solution for the adaptation of classical algorithms to their quantum equivalents, in an agnostic and multiplatform way, so that they can be executed on a plurality of quantum machines in a single platform. Likewise, as this platform proposes a framework where specific adaptations must be developed for each different quantum computer, it does not establish the way in which this should be done, ultimately being the responsibility of the user to adapt the platform to the solution of a specific problem, or to a specific quantum machine.

Other known references such as *"*Quantum Volume: A Yardstick To Measure The Performance Of Quantum Computers - Moor Insights & Strategy" (2020), and Cross Andrew W. et al., "Validating quantum computers using randomized model circuits", Phys. Rev. A, vol. 100, No. 3 (2019) describe several tracking systems for measuring the performance of quantum computers.

The present invention is aimed to overcome the aforementioned limitations of the state of the art by means of an application development system in hybrid quantum computing networks, which facilitates the adaptation of conventional algorithms to their quantum equivalents in an agnostic and multiplatform manner, such that they can be executed in machines from different manufacturers as required, whether by decision of the user or by automatic detection based on different telemetry models.

### BRIEF DESCRIPTION OF THE INVENTION

The present invention provides a solution to the technical problems described above by means of a hybrid quantum computing system providing a framework of tools, services, and processes, the objective of which is to consolidate the quantum application building model, such that multidisciplinary teams in any field of knowledge do not have to be concerned with specific technologies from each manufacturer, rather only the general approach to algorithms and the execution thereof. It is therefore possible to avoid the high technical complexities associated with each native system.

More specifically, the object of the invention relates to an application development and execution system in hybrid quantum computing networks.

Said system preferably comprises one or more clients connected to at least one server, wherein said server is, in turn, connected to one or more quantum computers, wherein each of said quantum computers presents a proprietary application programming interface, as well as potential extensions of application programming interfaces (APIs) corresponding to each manufacturer, providing layers of optimisation and control of additional errors. Likewise, the server may constitute both a unique element and, in different preferred embodiments, a plurality of servers interconnected, for example in farm/clusters with a cooperative and/or competitive structure.

A system in accordace with independent claim 1 is provided.

In a preferred embodiment of the invention, the system further comprises an algorithmic management subsystem, configured with one or more interfaces for manually editing quantum meta-algorithms.

In another preferred embodiment of the invention, the system further comprises a telemetry subsystem, configured with one or more functionalities for tracking, debugging, and measuring the execution performance of quantum computing algorithms in quantum computers, and the relation thereof with quantum computing meta-algorithms. More preferably, said telemetry subsystem comprises one or more machine learning or artificial intelligence modules for measuring the execution performance of quantum computing algorithms in quantum computers, the decoherence thereof, and/or the relation thereof with quantum computing meta-algorithms.

In another preferred embodiment of the invention, the system further comprises a control subsystem fed with outputs from the telemetry subsystem, adapted for providing information about the progression, load, and debugging of the execution of quantum computing algorithms in quantum computers.

In another preferred embodiment of the invention, the quantum computers and the server form a distributed or cloud-based computing network.

In another preferred embodiment of the invention, one or more of the quantum computers comprise a virtual machine. Said virtual machine more preferably adopts the form of one or more real machine simulators, which can be utilised separately or interconnected in server clusters or farms.

In another preferred embodiment of the invention, the BPM is configured with means for receiving remote function call messages which parameterise and encapsulate instructions sent by the clients.

In another preferred embodiment of the invention, the BPM comprises a first web service for collecting call messages and for storing thereof in a database.

In another preferred embodiment of the invention, the compiler, the transpiler, and/or the processing unit execution engine are implemented as one or more plugin components.

In another preferred embodiment of the invention, the BPM comprises a plugin loading module.

In another preferred embodiment of the invention, the BPM comprises a second web service adapted for processing responses asynchronously.

In another preferred embodiment of the invention, the BPM is configured with means for sending asynchronous response messages to the client.

In another preferred embodiment of the invention, the BPM comprises a command pool processor, adapted for processing commands pending execution in the database. More preferably, said command pool processor is programmable over time, recurrently, and with an autonomous execution, in the form of daemons.

In another preferred embodiment of the invention, one or more of the quantum computers comprise a quantum gate-based computing model. Likewise, alternatively or complementarily, one or more of the quantum computers may comprise a quantum annealing-based computing model. This ensures compatibility of the system with most manufacturers (IBM, Microsoft, Rigetti, D-Wave, Google, lonQ, Fujitsu, Amazon Braket, etc.), as well as third-party quantum computing simulators (QuTECH, CTIC, etc.).

### DESCRIPTION OF THE FIGURES

To complete the description and help better understand the invention, a series of figures that are part of the description and illustrate a preferred embodiment of the described system are attached hereto. Said figures, therefore, should not be interpreted as being limiting of the scope of the invention, but rather as a mere example of how the invention can be carried out.
Figure 1 shows a high-level diagram of the system of the invention, according to a preferred embodiment thereof.
Figure 2 shows a detailed diagram of the system of the invention, according to a preferred embodiment thereof.

### Numerical references in the figures:

In order to help better understand the technical features of the invention, the mentioned figures include a series of numerical references, wherein the following is depicted in an illustrative and non-limiting manner:

| | |
|---|---|
| 1 | Business process manager (BPM) |
| 2 | Compiler |
| 3 | Dictionary |
| 4 | Transpiler |
| 5 | Processing unit execution engine |
| 6 | Algorithmic management subsystem |
| 7 | Telemetry subsystem |
| 8 | Control subsystem |
| 9 | Remote function call messages |
| 10 | Web service for collecting messages |
| 11 | Database |
| 12 | Web service for processing responses asynchronously |
| 13 | Asynchronous response messages |
| 14 | Command pool processor |
| 15 | Plugin loading module |
| 100 | Client |
| 200 | Server |
| 300, 300', 300" | Quantum computers |

### DETAILED DESCRIPTION OF THE INVENTION

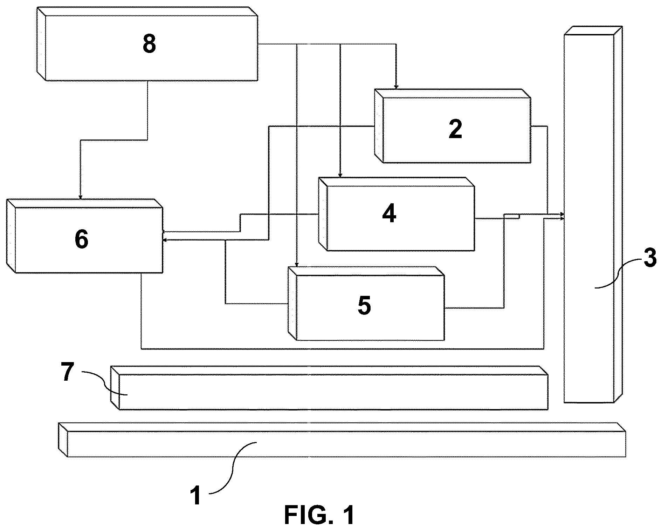

A preferred embodiment of the present invention is described below, with said description provided for illustrative and non-limiting purposes and based on Figures 1-2 of the present document.

Figure 1 shows a high-level diagram of the invention, wherein a preferred embodiment of the claimed application development and execution system in hybrid quantum computing networks is depicted. As can be seen, said system comprises a set of tools, services, and processes (together referred to as "framework") that make it possible to execute quantum process units, regardless of the computing environment or technology under which they are executed, and abstracting the conventional plugin from the complexity that characterizes the adaptation thereof to the quantum field for the user. Therefore, the fundamental objective of the system is to provide to conventional plugins the equivalent of conventional process units (objects with methods and functions) which encapsulate, on a high level, the following:
- Library taxonomies with "Out of the Box" solutions.
- Interfaces for enabling the extensibility of predetermined libraries of the system.
- A quantum architecture by means of abstraction of the type of technology, complexity, and characteristics.
- A scalable architecture (preferably in distributed server networks), capable of executing routines in multiple computing units by means of parallel work processes and techniques.
- A reliable architecture, capable of providing error control mechanisms which enable minimising the decoherence characteristic of quantum hardware.
- An abstract language which allows designing high-level quantum circuits, regardless of the underlying quantum technology and of the type of approach needed for solving a problem. This implies not only providing rules for using gates logic and the effects thereof, but also the capture of events and data needed for solving more complex problems.
- A modular execution core that can be expanded in an entirely parametrised manner.
- A transpiler capable of generating specific code according to the rules of the circuit, as well as optimising the circuit for generating the best code possible, which will generate the units compatible with the execution core of the system. Said transpiler is furthermore capable of providing the decoherence protection layer that is possible to the overall result.
- A dictionary for the registry of components, algorithms, requirements, etc., that offers a reusable base for new problems on already developed and tested solutions, allowing both public and private use thereof according to terms defined in contracts.
- A first persistence engine which will store the complete telemetry of the executed processes, such that all the possible information can be collected from the experiments performed, providing different inputs to machine learning and artificial intelligence (AI) subsystems.
- A second persistence engine which will store the configuration, management, parametrisation, security, and monetisation, as well as the user interface plugins which will allow the system to be governed. Said engine is necessary in any information system, and must offer a set of both utility and user interface tools which allow access to system functionalities in a controlled, assisted and accessible manner for professionals who are not necessarily skilled in the most basic principles of the underlying quantum system.
- Integration interface plugins which allow any third-party system to utilise the libraries, using preferably open protocols. In that way, the system can be coupled to conventional on-demand systems, providing the hybrid context necessary for the coexistence of conventional and quantum computing.

According to the above, the system of the invention depicted in Figure 1 more specifically comprises the following subsystems:
- Business process manager (1) (or BPM):
   The BPM (1) is the subsystem responsible for providing the ecosystem of commands and asynchronous processes, based on the queueing theory, whereby the system assures fully client-decoupled execution processes. To that end, the BPM (1) provides a scalable engine that programs and launches services of call, execution, telemetry, protocol, and control plugin. The plugins to be executed in a programmed manner will be built on this engine, such that the BPM (1) acts like a general supervisor of the behaviour of all the functional units and modules of the system. Each plugin therefore behaves like an execution unit separated from the others in the system, preferably characterised by a proprietary incoming message protocol, a response message protocol, and a set of binary execution modules. It should be clarified at this point that BPM technologies are themselves generally known. Therefore, the present invention does not claim any particular or advantageous BPM technology, but rather the general application thereof in the field of the described system, as well as the novel combination thereof with the remaining elements forming said system.
- Compiler (2):
   The compiler (2) is the subsystem responsible for generating the metalanguage products of the system (or meta-algorithms) from the grammar generated by the user, coming from conventional or quantum computing algorithms, based on specific languages, grammar, or semantic rules, the definition of quantum gates, flow control, and the execution thereof by a compilation engine. This allows the user to translate said algorithms to a language suitable for processing by the system, for later execution under the specific language of each quantum computing machine and manufacturer requirement.

To perform these functions, the compiler (2) is connected to a dictionary (3), implemented in the form of one or more databases, software libraries, or correspondence tables, which allow the algorithm proposed by the user to be translated into the metalanguage used by the system. In this context, the preferred use of the compiler (2) will be for the translation of conventional algorithms to the mentioned metalanguage in the form of meta-algorithms, for the purpose of the execution thereof under a quantum logic that is, therefore, advantageous. However, in another preferred embodiment of the invention, the compiler (2) and the dictionary (3) can be configured for translating quantum algorithms developed in a specific language to the quantum metalanguage of the system in the form of meta-algorithms.

For the purpose of streamlining and simplifying the user's tasks, the translation performed by the compiler (2) for designing quantum circuits may be partially or entirely implemented by means of one or more graphic design interfaces, which will allow visually representing said circuits, as well as possible variations, errors, or other metrics thereof, prior to compilation as quantum meta-algorithms in the system metalanguage. In that sense, for example, said interfaces can be based on tools or drivers of a known design, such as Quirk, Flowchart, etc.

The compiler (2) may have as many compilation classes as different input grammar may be aggregated to the system. Or it may even allow being extended by third parties, for example as the result of customised extensions or partnerships, via application programming interfaces (APIs). This feature presents an evident competitive advantage and confers excellent possibilities for scalability and integration with tools and solutions specialised in very isolated third-party services. It should also be clarified in relation to this point that compiler technologies themselves are generally known. Therefore, the present invention does not claim any particular or advantageous compilation technology, but rather the general application thereof in the field of the described system, as well as the novel combination thereof with the remaining elements forming said system.
- Transpiler (4):
   The transpiler (4) is the subsystem responsible for generating the process units from specifications of metalanguage of the system, preferably in the form of quantum flows and circuits (meta-algorithm). Therefore, from the input of a quantum algorithm design, the transpiler (4) is in charge of generating process units that can be interpreted by a specific native quantum computer, following a process similar to that of the compiler (2), exporting the system metalanguage to the code accepted by the quantum computer, and preferably providing control elements that do not have to be supported (or at least not in a widespread manner) by each specialised quantum provider. For example, it provides the circuit with non-existing gates by means of transforming available equivalent resources, "multi-control gates" as an algorithmic extension, iterations integrated in the actual circuit diagram, parametrisations of input values and iterators, oracle encapsulation, definitions of equivalent annealing Hamiltonians according to specifications, etc. To that end, the transpiler (4) will also be connected with the dictionary (3) and, more preferably, with transformer components. Thanks to said transformer elements, high-level capabilities supported by the metalanguage in the agnostic circuit are integrated, being implemented with an equivalent circuit, supported based on the different providers. By way of example, it is possible to implement as transpilation providers acceptable to the development kit Microsoft QDK (HOST Python transpiler, CIRCUITS Q# transpiler), IBM qExperience QISKIT (HOST Python transpiler, CIRCUITS qASM transpiler v2.0) or any other similar kit from among those available on the market (QuTECH, DWAVE, FUJITSU, AMAZON BRACKET, etc.).

The transpiler (4) is preferably a master class encoding both the translation/interpretation rules and the implementations of these rules, for example by means of specific drivers for the different manufacturers. This furthermore allows executing part of the algorithm in a first quantum machine and continuing another part of said algorithm in a second machine, obtaining a combined result from this process, which is scalable to a plurality of quantum providers.

In turn, the process units of the transpiler (4) primarily comprise one or more of the following functionalities:
- the definition of inputs in the dictionary (3) with the specifications of the type of quantum hardware to be used (manufacturer's web service, access to a quantum execution environment, start of the quantum simulator, etc.);
- the transformation of circuits into the agnostic metalanguage of the platform for generating everything that the target provider does not support *per* se, except by performing mathematical transformations in the algorithm which generate an equivalent compatible with the target provider. The algorithm is respected, but the circuit may be physically altered in order to be compatible with the target platform;
- the generation of the quantum component responsible for execution in the quantum hardware and specific to the platform;
- the evaluation of the decoherence control layer aggregation level, such that the actual component is capable, by design, of trying to detect, measure, and mitigate to a certain extent the quantum error inherent to the system, as well as optimisations which allow maximum utilisation of the target quantum machine capability;
- the storage and taxonomy of compiled units.

Like in the case of other elements, it should be also clarified that transpiler technologies are themselves generally known. Therefore, the present invention does not claim any particular or advantageous transpilation technology, but rather the general application thereof in the field of the described system, as well as the novel combination thereof with the remaining elements forming said system.
- Dictionary (3):
   As mentioned above, this subsystem is responsible for providing the storage, cataloguing and management functionalities of software libraries and the corresponding operations thereof for the compilation and transpilation methods of the system. In different preferred embodiments of the invention, the dictionary (3) may further comprise one or more metamodels providing interfaces to the recorded operations, information about each algorithm's operation access security level, associated decoherence level control information, version information and timestamp of the operation, cost of the associated execution, error record and logs, generated algorithm execution results, etc.

As in the case of other elements, it should be clarified that the use of dictionaries and software libraries in general, is itself generally known. Therefore, the present invention does not claim said use as a particular or advantageous feature, but rather the general application thereof in the field of the described system, as well as the novel combination thereof with the remaining elements forming said system.

The form of abstracting the elements of different manufacturers and generating rules in the dictionary (3) means that the transpilation drivers can be both modular and parameterisable, allowing to be modified, adapted, or developed as desired, without affecting the end system.
- Processing unit execution engine (5):
   The execution engine (5) is the subsystem responsible for the execution of quantum processing units with the system. Said process units correspond to "conventional" code components responsible for coordinating and controlling the execution of a quantum process unit in suitable quantum machines, or where appropriate in a simulator or in a conventional process on very specific hardware devices. The execution engine (5) preferably controls the generations of execution units for each possible manufacturer, according to the abstract rules encoded in a master class and implemented in different driver classes which are responsible for directly knowing the manufacturer's platform.

Following the instructions of the BPM (1), the execution engine (5) preferably corresponds to a plugin, the role of which will be to process the quantum algorithms generated by the transpiler (4) and launch said algorithms to be processed in the selected quantum computer. Likewise, the execution engine (5) allows processing additional data of the system, for example data linked to specific metrics of the algorithm execution in the selected quantum computer, or data related to machine learning processes, which allow evaluating specific parameters of the execution performed by the algorithm and the quantum computer, acquiring knowledge, for example, about what the best execution options are in each case by means of artificial intelligence. Preferably, the system also allows the manual input of parameters by the user, serving as a starting point for the algorithm. This can be carried out in each call to the system, or the parameters can alternatively be retrieved by means of the dictionary (3).

The processing unit execution engine (5) and its connection to the different native quantum computing platforms can be configured as a computing network following different network topologies, where it is possible in different embodiments to use distributed networks, hierarchical networks, or cloud-based computing topologies, in a scalable and/or elastic manner.
- Algorithmic management subsystem (6):
   Optionally in the system, this subsystem (6) is responsible for providing the high-level design experience of the quantum circuits and algorithms, preferably operating under the independent metalanguage of a specialised quantum/conventional technology. Therefore, in addition to the capability of building plugins and low-level process unit extensions, by means of direct access to specific quantum technologies, the algorithmic management subsystem (6) allows the user to be able to be abstracted from that level, by means of design and editing functionalities of the algorithms generated by the compiler (2), by means of the user interface thereof.

In this sense, the metalanguage and its interpretation as a meta-algorithm by the algorithmic management subsystem (6) will encompass not only the common characteristics of quantum circuits and the capability of abstracting specialised rules from specific quantum computers, but also the capability of encapsulating them for reusing same in higher level designs, as well as the capability of defining the input/output requirements (in terms of simple and complex data types) and the events associated with the nature of each element defined in the system, such that it is possible to define tools reacting to same.

In a preferred embodiment of the invention, the algorithmic management subsystem (6) furthermore provides additional tools which allow the assisted design of quantum algorithms. Said tools may comprise, for example, software development kit (SDK) utilities, such as a graphic editor fully supporting metalanguage capabilities, comprising a graphic designer configured for composing both the general flow of the algorithm and the design of the quantum circuits that complete it, by means of the visual depiction organised in quantum bit lines, quantum gates, quantum method abstractions, data log connectors, or event mapping, among others.
- Telemetry subsystem (7):
   Optionally in the system of the invention, the telemetry subsystem (7) is responsible for concentrating all the data generated in the complete process up to the execution of a specific plugin. In different embodiments of the invention, each of the modules of the system can interact with the telemetry subsystem (7), such that it is possible to track, debug, and measure each and every one of the functionalities of said system. Likewise, the outputs of the telemetry subsystem (7) can be used to feed a control subsystem (8), for providing complete information about the development, loading, and debugging of the executed processes.
- Control subsystem (8):
   As described in the preceding point, this subsystem (8) is responsible for providing a user interface for internally managing the different modules of the system. Therefore, by means of the integration service connections of each of said modules, access to infrastructure, telemetry, and parametrisation data will be provided so that a system administrator can control the topology of the offered services and products, or so that users can manage the scope of execution of the processes of the system.

As in the case of other elements, it should be clarified that the uses of algorithmic management, telemetry, or control subsystems (6, 7, 8) are themselves generally known. Therefore, the present invention does not claim said uses as a particular or advantageous feature separately, but rather the general application thereof in the field of the described system, as well as the novel combination thereof with the remaining elements forming said system.

### Preferred embodiment and use of the system of the invention:

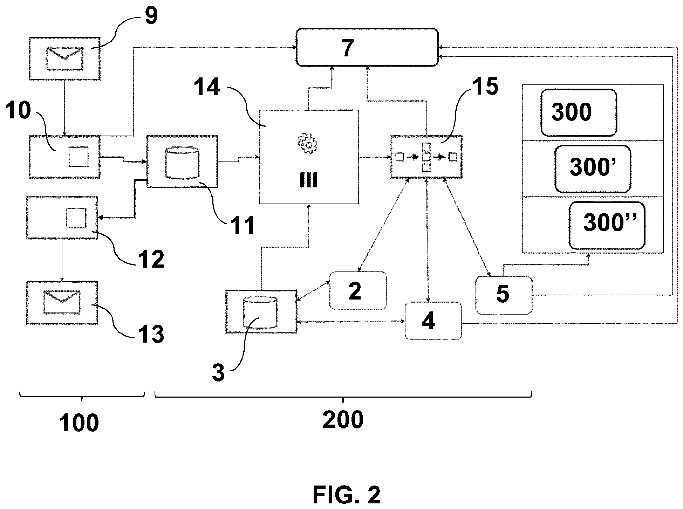

Lastly, having described the essential elements of the invention and, by way of example, the use of the system, Figure 2 illustrates a detailed embodiment of the different elements thereof and the corresponding use thereof as described below:
For the execution of each process, the BPM (1) will provide a general scalable execution framework, preferably based on the initial generation of remote function call (or RFC) messages (9) which parameterise and encapsulate the user's instructions, preferably through a remote client (100) connected to the system. Call messages will typically comprise XML documents, which may comprise information about the type of execution command and the corresponding algorithm, target machine, date, user, location, etc.

Call messages (9) are preferably collected by a first web service (10), configured for storing messages (9) in a database (11), which is responsible for persisting with the commands, their execution contexts, execution histories, and telemetries. By way of example, said database (11) may comprise the following entities: command warehouse, processing warehouse, records warehouse, configuration warehouse, or security warehouse, among others.

Additionally, the BPM (1) of the system contemplates the use of a second asynchronous response processing web service (12). This service provides an API to the extensibility components of the execution engine (5), such that serialisation of the call messages (9) is provided with corresponding serialisations of response messages (13) to the client (100) of the user. Therefore, the components of a server (200) of the system can launch said response messages (13) to the clients (100) in an asynchronous manner if same are part of the protocol thereof. Given that the asynchronous response service (12) depends on the type of functionality implemented by the plugins, its existence is generally conditional to the design thereof, and to its use by clients (100) on the user side. Like in the collecting web service (10), there is a web service call API through which the client (100) can collect persistent asynchronous response messages (13).

Additionally, the BPM (1) has a command pool processor (14), preferably parallel, which is responsible for processing commands pending execution in the database (11). This processor (14) is responsible for planning executions of the plugins in a specific node of a set of process business servers (200).

By means of a queue management algorithm simulated on the database (11), series of pools are generated on received commands, in a transactional manner and preferably in an instantiated manner in each node. The BPM (1) inputs them in the message processing CORE and marks the in-process messages in the database to pass the persistence engine of the database (11). Therefore, an individual and isolated execution thread starts for each command, where the command contained in the call message (9) is analysed and the dynamic loading of the corresponding plugin is performed, to start up the functionality contained in the interface.

Another very specific functionality of the command pool processor (14) makes it possible to encode special plugins which can be programmed over time, recurrently, and with a completely autonomous execution. It is therefore possible to implement "daemons" in the BPM (1) which execute supervision, maintenance, performance, and control tasks.

The BPM (1) is also responsible for controlling a loading module (15) which launches execution plugins developed by third parties for each quantum computer technology. From said plugins, the loading module (15) is sequentially communicated with the compiler (2), with the transpiler (4), and with the processing unit execution engine (5), said communications being mediated by use of the dictionary (3) in compilation and transpilation operations.

Basically, and as described above, the compiler (2) is the plugin responsible for performing tasks for analysing the digital circuit design language and the orchestration flow design language. Through a corresponding circuit compilation and orchestration flow compilation API, this plugin is responsible for the commands for analysis of compilation call messages (9), it collects the quantum circuit design language instance, analyses the language, compiles the design language into a quantum circuit intermediate language (metalanguage), and persists the product in the dictionary (3) of compiled quantum circuits.

In turn, the transpiler (4) is the plugin responsible for transpiling metalanguage meta-algorithms in the native language of each manufacturer. By collecting the transpilation command as input of the call message (9), the identifier of the flow to be transpiled is extracted and, by means of the dictionary (3), the API transpilation components proceed to the generation of the manufacturer's native code. That is, code modules associated with a specific supported quantum hardware platform are generated, leaving the specific execution elements, to be determined by the execution command, pending in said modules. Likewise, the metalanguage preferably supports more characteristics than what a specific manufacturer can accept, and therefore it is not limited to only the capabilities of the SDK of a particular provider.

This compilation, transpilation, and execution process cycle preferably persists in the dictionary (3), such that all the code elements can be classified depending on the technological requirements of a specific manufacturer and its compilation requirements. At this point, the system will inject the code units needed for all the execution flow to be agnostic and adaptable to each platform. As a result of this capability, the system of the invention is capable of providing a number of advantages to the user, allowing, between other things:
- Injecting elements not directly supported between platforms, by means of proprietary modules that overcome deficiencies or specifically enhance the platform.
- Injecting additional or complementary error control elements to supported hardware platforms.
- Injecting additional optimisation elements supported or complementary to supported hardware platforms.

By way of example, the code injected in the compilation, transpilation, and execution processes may comprise adding gate supports that do not exist in a specific provider, control structures in the actual circuit (such as multi-control gates) that are not supported by multiple manufacturers, repetition structures not supported by manufacturers in their circuits, or virtual gate structures which encapsulate subcircuits in a modular structure.

In turn, the process execution engine (5) is proposed as a plugin responsible for generating, by means of a corresponding API, the physical execution units of a plurality of platforms or quantum computers (300, 300', 300"), as required by the compilers of each manufacturer. Process launching by the execution engine (5) provides the execution load of a native quantum application, the injection of the manufacturer's security access control and the injection of result abstraction. The measurement of results is thereby unified in a single common format, regardless of the manufacturer. The execution engine (5) is also responsible for capturing all the execution telemetry of each quantum application unit.

Therefore, as a result of machine learning and the comparison between different native platforms (300, 300', 300"), the process execution engine (5) will be configured for taking maximum advantage of the power of the native API of each manufacturer, which allows:
- Utilise APIs for accessing democratised resources according to the rules of the manufacturer.
- Applying the user credentials according to a specific contracting level.
- Applying abstractions not directly supported by the platform.
- Applying quantum machine initialisation routines according to the technology and requirements of the manufacturer of the hardware.

As mentioned above, in the system of the invention, one or more of the quantum computers (300, 300', 300") comprise a quantum gate-based computing model. Likewise, alternatively or complementarily, one or more of the quantum computers (300, 300', 300") may comprise a quantum annealing-based computing model. This ensures compatibility of the system with most manufacturers (IBM, Microsoft, Rigetti, D-Wave, Google, lonQ, Fujitsu, Amazon Braket, etc.), as well as third-party quantum computing simulators (QuTECH, CTIC, etc.).

## Claims

1. An application development and execution system in hybrid quantum computing networks, comprising one or more clients (100) and at least one server (200) to which the one or more clients are connected, wherein said at least one server (200) is in turn connected to a plurality of quantum computers (300, 300', 300"), and wherein each of said quantum computers (300, 300', 300") presents a proprietary application programming interface, API;
wherein the server (200) comprises the following elements, implemented by means of software and hardware:
- a business process manager, BPM (1), adapted to program quantum computing algorithm processing units in the plurality of quantum computers (300, 300', 300"), from instructions generated by the one or more clients (100);
- a compiler (2), adapted to compile a first conventional or quantum computing algorithm as a quantum computing meta-algorithm, through a series of compilation rules defined in a dictionary (3);
- a transpiler (4), adapted to transpile the quantum computing meta-algorithm as a second quantum computing algorithm, through a series of transpilation rules defined in the dictionary (3), and wherein said second quantum computing algorithm is compatible with the API of one of the quantum computers (300, 300', 300"); and
- a processing unit execution engine (5), adapted to execute the second quantum computing algorithm in at least the quantum computer (300, 300', 300") having the API with which it is compatible;
and **characterised in that** the system is further adapted to inject code units in the compilation, transpilation and execution processes, wherein said injected code units comprise, at least:
- code units, injected by the processing unit execution engine (5), and adapted to control a security access to the quantum computer (300, 300', 300") compatible with the API; and
- results abstraction code units, injected by the process execution engine (5), to unify measurement of results in the quantum computer (300, 300', 300") compatible with the API, in a single common format, regardless of the manufacturer of the quantum computer (300, 300', 300") compatible with the API.

2. The system according to the preceding claim, further comprising an algorithmic management subsystem (6), configured with one or more interfaces for manually editing quantum meta-algorithms, and comprising a graphic designer configured for composing both the general flow of said meta-algorithms and the design of quantum circuits that complete them, by means of a visual depiction organised in quantum bit lines, quantum gates, quantum method abstractions, data log connectors, or event mapping.

3. The system according to any of the preceding claims, further comprising a telemetry subsystem (7), configured with one or more functionalities for tracking, debugging, and measuring the execution performance of quantum computing algorithms in the plurality of quantum computers (300, 300', 300"), the decoherence thereof, and/or the relation thereof with quantum computing meta-algorithms.

4. The system according to the preceding claim, wherein the telemetry subsystem (7) comprises one or more machine learning or artificial intelligence modules for measuring the execution performance of quantum computing algorithms in quantum computers (300, 300', 300"), and the relation thereof with quantum computing meta-algorithms.

5. The system according to the preceding claim, further comprising a control subsystem (8) fed with outputs from the telemetry subsystem (7), adapted for providing information about the progression, load, and debugging of the execution of quantum computing algorithms in quantum computers (300, 300', 300").

6. The system according to any of the preceding claims, wherein the quantum computers (300, 300', 300") and the server (200) form a distributed or cloud-based computing network; and/or wherein the server (200) is part of a cooperative or competitive server cluster or server farm.

7. The system according to any of the preceding claims, wherein one or more of the quantum computers (300, 300', 300") comprise a virtual machine.

8. The system according to any of the preceding claims, wherein the BPM (1) is configured with means for receiving remote function call messages (9) which parameterise and encapsulate instructions sent by the clients (100).

9. The system according to the preceding claim, wherein the BPM (1) comprises a first web service (10) for collecting call messages (9) and for storing thereof in a database (11).

10. The system according to any of the preceding claims, wherein the compiler (2), the transpiler (4), or the processing unit execution engine (5) are implemented as one or more plugins.

11. The system according to the preceding claim, wherein the BPM (1) comprises a plugin loading module (15).

12. The system according to the preceding claim, wherein the BPM (1):
- comprises a second web service (12) for processing responses asynchronously;
- is configured with means for sending asynchronous response messages (13) to the client (100); and/or
- comprises a command pool processor (14), adapted for processing commands pending execution in the database (11).

13. The system according to the preceding claim, wherein the command pool processor (14) is programmable over time, recurrently, and with an autonomous execution, in the form of daemons.

14. The system according to any of the preceding claims, wherein one or more of the quantum computers (300, 300', 300") comprises a quantum gate-based computing model.

15. The system according to any of the preceding claims, wherein one or more of the quantum computers (300, 300', 300") comprises a quantum annealing-based computing model.

## Patentansprüche

1. Anwendungsentwicklungs- und -ausführungssystem in hybriden Quantencomputernetzwerken, umfassend einen oder mehrere Clients (100) und mindestens einen Server (200), mit dem die Clients verbunden sind,
wobei der mindestens eine Server (200) wiederum mit einer Vielzahl von Quantencomputern (300, 300', 300") verbunden ist und jeder dieser Quantencomputer (300, 300', 300") eine proprietäre Programmierschnittstelle (API) bereitstellt;
wobei der Server (200) die folgenden, mittels Software und Hardware implementierten Elemente umfasst:
- einen Geschäftsprozessmanager (BPM) (1), der zur Programmierung von Quantencomputeralgorithmus-Verarbeitungseinheiten in der Vielzahl von Quantencomputern (300, 300', 300") anhand von Anweisungen, die von einem oder mehreren Clients (100) erzeugt werden, geeignet ist;
- einen Compiler (2), der zur Kompilierung eines ersten herkömmlichen oder Quantencomputeralgorithmus mithilfe einer Reihe von in einem Wörterbuch (3) definierten Kompilierungsregeln zu einem Quantencomputer-Metaalgorithmus geeignet ist;
- einen Transpiler (4), der zur Transpilierung des Quantencomputer-Metaalgorithmus mithilfe einer Reihe von im Wörterbuch (3) definierten Transpilierungsregeln in einen zweiten Quantencomputeralgorithmus geeignet ist, wobei der zweite Quantencomputeralgorithmus mit der API eines der Quantencomputer (300, 300', 300") kompatibel ist; und
- eine Verarbeitungseinheitsausführungsmaschine (5), die zur Ausführung des zweiten Quantencomputeralgorithmus auf mindestens dem Quantencomputer (300, 300', 300") geeignet ist, der die mit diesem kompatible API aufweist;
und **dadurch gekennzeichnet, dass** das System ferner zur Einfügung von Codeeinheiten in die Kompilierungs-, Transpilierungs- und Ausführungsprozesse geeignet ist,
wobei die eingefügten Codeeinheiten mindestens Folgendes umfassen:
- Codeeinheiten, die von der Verarbeitungseinheitsausführungsmaschine (5) eingefügt werden und zur Steuerung eines Sicherheitszugriffs auf den mit der API kompatiblen Quantencomputer (300, 300', 300") geeignet sind; und
- Ergebnisabstraktions-Codeeinheiten, die von der Prozessausführungsmaschine (5) eingefügt werden, um die Messung von Ergebnissen auf dem mit der API kompatiblen Quantencomputer (300, 300', 300") in einem einzigen gemeinsamen Format zu vereinheitlichen, unabhängig vom Hersteller des mit der API kompatiblen Quantencomputers (300, 300', 300").

2. System nach dem vorhergehenden Anspruch, ferner umfassend ein algorithmisches Verwaltungs-Subsystem (6), das mit einer oder mehreren Schnittstellen zum manuellen Bearbeiten von Quanten-Metaalgorithmen konfiguriert ist, und umfassend einen Grafikdesigner, der sowohl zum Erstellen des allgemeinen Ablaufs der Metaalgorithmen als auch zum Entwerfen von Quantenschaltungen, die diese vervollständigen, mittels einer visuellen Darstellung konfiguriert ist, die in Quantenbitleitungen, Quantengattern, Quantenverfahrenabstraktionen, Datenprotokollverbindern oder Ereigniszuordnungen organisiert ist.

3. System nach einem der vorhergehenden Ansprüche, ferner umfassend ein Telemetrie-Subsystem (7), das mit einer oder mehreren Funktionalitäten zum Verfolgen, Debuggen und Messen der Ausführungsleistung von Quantencomputeralgorithmen in der Vielzahl von Quantencomputern (300, 300', 300"), deren Dekohärenz und/oder deren Beziehung zu Quantencomputer-Metaalgorithmen konfiguriert ist.

4. System nach dem vorhergehenden Anspruch, wobei das Telemetrie-Subsystem (7) ein oder mehrere Module für maschinelles Lernen oder künstliche Intelligenz zur Messung der Ausführungsleistung von Quantencomputeralgorithmen in Quantencomputern (300, 300', 300") und deren Beziehung zu Quantencomputer-Metaalgorithmen umfasst.

5. System nach dem vorhergehenden Anspruch, ferner umfassend ein Steuerungs-Subsystem (8), das mit Ausgaben des Telemetrie-Subsystems (7) gespeist wird und zur Bereitstellung von Informationen über den Fortschritt, die Auslastung und das Debugging der Ausführung von Quantencomputeralgorithmen in Quantencomputern (300, 300', 300") geeignet ist.

6. System nach einem der vorhergehenden Ansprüche, wobei die Quantencomputer (300, 300', 300") und der Server (200) ein verteiltes oder cloudbasiertes Computernetzwerk bilden und/oder wobei der Server (200) Teil eines kooperativen oder konkurrierenden Serverclusters oder einer Serverfarm ist.

7. System nach einem der vorhergehenden Ansprüche, wobei einer oder mehrere der Quantencomputer (300, 300', 300") eine virtuelle Maschine umfassen.

8. System nach einem der vorhergehenden Ansprüche, wobei der BPM (1) mit Mitteln zum Empfangen von Remote-Function-Call-Nachrichten (9) konfiguriert ist, die die von den Clients (100) gesendeten Anweisungen parametrisieren und kapseln.

9. System nach dem vorhergehenden Anspruch, wobei der BPM (1) einen ersten Webdienst (10) zum Sammeln von Call-Nachrichten (9) und deren Speicherung in einer Datenbank (11) umfasst.

10. System nach einem der vorhergehenden Ansprüche, wobei der Compiler (2), der Transpiler (4) oder die Verarbeitungseinheitsausführungsmaschine (5) als ein oder mehrere Plugins implementiert sind.

11. System nach dem vorhergehenden Anspruch, wobei der BPM (1) ein Plugin-Lademodul (15) umfasst.

12. System nach dem vorhergehenden Anspruch, wobei der BPM (1):
- einen zweiten Webdienst (12) zur asynchronen Verarbeitung von Antworten umfasst;
- mit Mitteln zum Senden asynchroner Antwortnachrichten (13) an den Client (100) konfiguriert ist; und/oder
- einen Befehlspool-Prozessor (14) umfasst, der zur Verarbeitung von in der Datenbank (11) zur Ausführung anstehenden Befehlen geeignet ist.

13. System nach dem vorhergehenden Anspruch, wobei der Befehlspool-Prozessor (14) zeitlich, wiederkehrend und mit autonomer Ausführung in Form von Daemons programmierbar ist.

14. System nach einem der vorhergehenden Ansprüche, wobei einer oder mehrere der Quantencomputer (300, 300', 300") ein auf Quantengattern basierendes Rechenmodell umfassen.

15. System nach einem der vorhergehenden Ansprüche, wobei einer oder mehrere der Quantencomputer (300, 300', 300") ein auf Quanten-Annealing basierendes Rechenmodell umfassen.

## Revendications

1. Système de développement et d'exécution d'applications dans des réseaux informatiques quantiques hybrides, comprenant un ou plusieurs clients (100) et au moins un serveur (200) auquel sont connectés le ou les clients,
ledit au moins serveur (200) étant à son tour connecté à une pluralité d'ordinateurs quantiques (300, 300', 300"), et chacun desdits ordinateurs quantiques (300, 300', 300") présentant une interface de programmation d'application API propriétaire ;
le serveur (200) comprenant les éléments suivants, implémentés au moyen de logiciels et de matériels ;
- un business process manager BPM (1), adapté pour programmer des unités de traitement d'algorithmes de calcul quantique dans la pluralité d'ordinateurs quantiques (300, 300', 300"), à partir d'instructions générées par le ou les clients (100) ;
- un compilateur (2), adapté pour compiler un premier algorithme de calcul conventionnel ou
quantique en tant que méta-algorithme de calcul quantique, au moyen d'une série de règles de compilation définies dans un dictionnaire (3) ;
- un transpileur (4), adapté pour transpiler le méta-algorithme de calcul quantique en un second algorithme de calcul quantique, grâce à une série de règles de transpilation définies dans le dictionnaire (3), et dans lequel ledit second algorithme de calcul quantique est compatible avec l'API de l'un des ordinateurs quantiques (300, 300', 300") ;
- un moteur d'exécution d'unités de traitement (5), adapté pour exécuter le second algorithme de calcul quantique dans au moins l'ordinateur quantique (300, 300', 300") ayant l'API avec laquelle il est compatible ;
et **caractérisé en ce que** le système est en outre adapté pour injecter des unités de code dans les processus de compilation, de transpilation et d'exécution ,
lesdites unités de code injectées comprenant au moins :
- des unités de code, injectées par le moteur d'exécution d'unités de traitement (5), et adaptées pour contrôler un accès de sécurité à l'ordinateur quantique (300, 300', 300") compatible avec l'API ; et
- des unités de code d'abstraction des résultats, injectées par le moteur d'exécution des processus (5), pour unifier la mesure des résultats dans l'ordinateur quantique (300, 300', 300") compatible avec l'API, dans un format commun unique, quel que soit le fabricant de l'ordinateur quantique (300, 300', 300") compatible avec l'API.

2. Système selon la revendication précédente, comprenant en outre un sous-système de gestion algorithmique (6), configuré avec une ou plusieurs interfaces pour éditer manuellement des méta-algorithmes quantiques, et comprenant un dispositif de conception graphique configuré pour composer à la fois le flux général desdits méta-algorithmes et la conception des circuits quantiques qui les complètent, au moyen d'une description visuelle organisée en lignes de bits quantiques, en portes quantiques, en abstractions de méthodes quantiques, en connecteurs de registres de données ou en cartographie des événements.

3. Système selon l'une quelconque des revendications précédentes, comprenant en outre un sous-système de télémétrie (7), configuré avec une ou plusieurs fonctionnalités pour suivre, déboguer et mesurer les performances d'exécution d'algorithmes de calcul quantique dans des ordinateurs quantiques (300, 300', 300"), leur décohérence et/ou leur relation avec les méta-algorithmes de calcul quantique.

4. Système selon la revendication précédente, dans lequel le sous-système de télémétrie (7) comprend un ou plusieurs modules d'apprentissage automatique ou d'intelligence artificielle pour mesurer les performances d'exécution d'algorithmes de calcul quantique dans des ordinateurs quantiques (300, 300', 300"), et leur relation avec les méta-algorithmes de calcul quantique.

5. Système selon la revendication précédente, comprenant en outre un sous-système de contrôle (8) alimenté par des sorties du sous-système de télémétrie (7), adapté pour fournir des informations sur la progression, la charge et le débogage de l'exécution d'algorithmes de calcul quantique dans des ordinateurs quantiques (300, 300', 300").

6. Système selon l'une quelconque des revendications précédentes, dans lequel les ordinateurs quantiques (300, 300', 300") et le serveur (200) forment un réseau informatique distribué ou basé sur le cloud ; et/ou dans lequel le serveur (200) fait partie d'une grappe de serveurs ou d'une ferme de serveurs coopératifs ou compétitifs.

7. Système selon l'une quelconque des revendications précédentes, dans lequel un ou plusieurs des ordinateurs quantiques (300, 300', 300") comprennent une machine virtuelle.

8. Système selon l'une quelconque des revendications précédentes, dans lequel le BPM (1) est configuré avec des moyens de réception de messages d'appel de procédure à distance (9) qui paramètrent et encapsulent des instructions envoyées par les clients (100).

9. Système selon la revendication précédente, dans lequel le BPM (1) comprend un premier service web (10) pour collecter des messages d'appel (9) et pour les stocker dans une base de données (11).

10. Système selon l'une quelconque des revendications précédentes, dans lequel le compilateur (2), le transpileur (4) ou le moteur d'exécution d'unités de traitement (5) sont implémentés sous la forme d'un ou de plusieurs plug-ins.

11. Système selon la revendication précédente, dans lequel le BPM (1) comprend un module de chargement de plug-ins (15).

12. Système selon la revendication précédente, dans lequel le BPM (1) :
- comprend un second service web (12) pour traiter les réponses de manière asynchrone ;
- est configuré avec des moyens pour envoyer des messages de réponse asynchrones (13) au client (100) ; et/ou
- comprend un processeur de pool de commandes (14), adapté pour traiter des commandes en attente d'exécution dans la base de données (11).

13. Système selon la revendication précédente, dans lequel le processeur de pool de commandes (14) est programmable dans le temps, de façon récurrente, et avec une exécution autonome, sous la forme de démons.

14. Système selon l'une quelconque des revendications précédentes, dans lequel un ou plusieurs des ordinateurs quantiques (300, 300', 300") comprennent un modèle de calcul basé sur une porte quantique.

15. Système selon l'une quelconque des revendications précédentes, dans lequel un ou plusieurs des ordinateurs quantiques (300, 300', 300") comprennent un modèle de calcul basé sur le recuit quantique.
